# EUROPEAN PATENT SPECIFICATION

(11) **EP 2 570 007 B1**
(45) Date of publication and mention of the grant of the patent: **02.08.2017**
(21) Application number: 10743232.0
(22) Date of filing: 12.05.2010
(51) Int. Cl.: H05K 3/02

(54) **METHOD OF MANUFACTURE OF FLEXIBLE PRINTED CIRCUITS, FLEXIBLE PRINTED CIRCUITS, MODULE AND CARD**
VERFAHREN ZUR HERSTELLUNG FLEXIBLER LEITERPLATTEN, FLEXIBLE LEITERPLATTE, MODUL UND KARTE
PROCÉDÉ DE FABRICATION POUR CIRCUITS IMPRIMÉS FLEXIBLES, CIRCUITS IMPRIMÉS FLEXIBLE, MODULE ET CARTE

(43) Date of publication of application: 20.03.2013
(73) Proprietor: Linxens Holding, 78280 Guyancourt (FR)
(72) Inventor: BERDALLE, Laurent, 27120 St Aquilin De Pacy (FR); HOVEMAN, Bertrand, 95610 Eragny sur Oise (FR)
(74) Representative: Regi, François-Xavier
(86) International application number: PCT/IB2010/001809
(87) International publication number: WO 2011/141764

(56) References cited:
- DE-A1- 1 590 975
- GB-A- 2 093 401
- JP-A- 4 115 929
- US-B1- 6 320 135

## Description

### FIELD OF THE INVENTION

The invention relates to methods of manufacture of flexible printed circuits having electrical contacts.

### BACKGROUND

Smartcards are now used in every day's life. Some cards are contact-less cards, which can be read by a card reader without any contact. Some cards are contact cards, which comprise electrical metallised contacts. When such contact cards are placed inside a suitable card reader, terminals of the contact reader comes in physical contact with the metallised contacts of the card, in order to access information present in a chip of the card.

To manufacture such cards, it is necessary to manufacture a flexible printed circuit, which comprises these contacts.

In particular, the invention relates to methods for manufacturing such flexible printed circuits.

Although such flexible printed circuits have already been manufactured, it is still required to optimize the manufacturing method. For example, one strives to reduce the cost for manufacturing such flexible printed circuits, while still providing properties of the flexible printed circuits which reach the expectations of the card designers. Document JP 4 115929 discloses a lamination process for a flexible printed wiring board. Document US 6 320 135 discloses a band-shaped reinforcing layer comprising openings surrounding sprocket holes.

### SUMMARY

A method of manufacture of flexible printed circuits comprises the provision of a rolled band of a flexible material. This band is virtually divided in a plurality of zones.

The method further comprises the unrolling of the band. In this way, zones are moved the one(s) after the other(s) through a metallization cell.

At the metallization cell, at least five electrical contacts per zone are formed on the band. These electrical contacts are made of electrically conductive material.

Each one of the contacts is connected to a common frame by a respective connection portion.

Each contact has an optimized shape which encompasses a rectangle of 2 millimetres (mm) length and 1.7 mm width.

The summed surface area of the contacts is less than 127.01 mm².

With these features, the specific geometry of the contacts can be tailored to the requirements.

When calculating the summed surface of the contacts, only the contacts will be taken into account. The connection portions and the common frame will not be taken into account. Normally, these connection portions and common frame are not parts of the final card.

In some embodiments, one might also use one or more of the features defined in the dependent claims.

### BRIEF DESCRIPTION OF THE DRAWINGS

Other characteristics and advantages of the invention will readily appear from the following description of four of its embodiments, provided as non-limitative examples, and of the accompanying drawings.

On the drawings:
- Fig. 1 is a schematic drawing of an apparatus for implementing the invention,
- Fig. 2 is a partial enlarged view of a band in Fig. 1,
- Fig. 3a is a partial top view of a band of flexible printed circuits according to a first embodiment,
- Fig. 3b is a partial sectional view taken along lines B-B of Fig .3a,
- Figs. 4a and 4b are views corresponding to Figs. 3a and 3b, respectively, for a third embodiment,
- Fig. 5 is a partial schematic top view of an IC card,
- Fig. 6 is a view corresponding to Fig. 3a for a second embodiment, and
- Fig. 7 is a view corresponding to Fig. 3a for a fourth embodiment.

On the different figures, the same reference signs designate like or similar elements.

### DETAILED DESCRIPTION

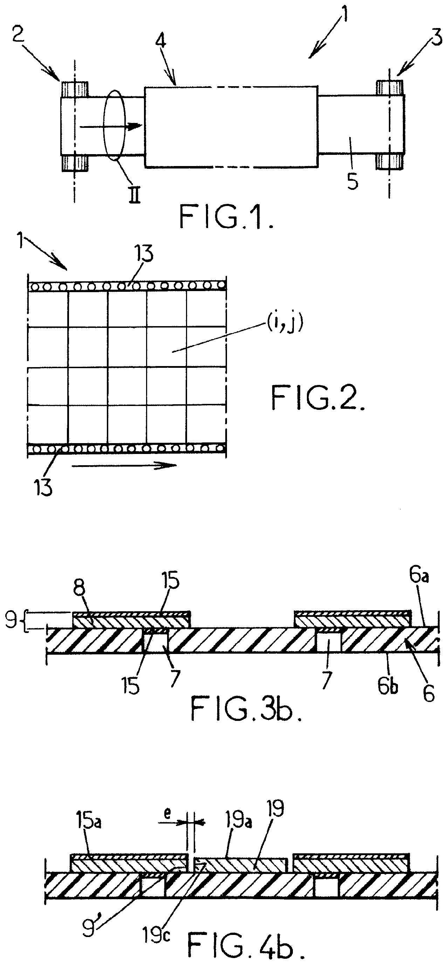

Fig. 1 shows a band-forming apparatus 1 comprising a supply station 2, an uptake station 3, and a metallization cell 4. In the following, the metallization cell 4 is described as an electro-deposition cell. However, other technologies could be used within the frame of the invention, such as electro-less deposition, and/or chemical deposition where ions are reduced on the substrate without external energy applied. The cell 4 is intermediate between the stations 2 and 3. A continuous band 5 is moved through the cell 4, from the supply station 2 to the uptake station 3. For example, the apparatus comprises a reel-to-reel system. The band 5 is unwound from the supply station 2, handled by the cell 4, and rolled-up on the uptake station 3.

As can be seen on Fig. 2, the band 5 can be virtually divided in a plurality of zones. Each zone will ultimately provide one contact pad for one smart card. The band can be virtually divided in a plurality of rows and columns. Each zone can be identified by its coordinates i and j, designating respectively the row and column of the zone in the band. The band can for example have between 1 and 15 parallel rows (4 rows are shown on Fig. 2). The number of columns can reach many hundreds or thousands.

The band is thin (its dimension normal to the plane of Fig. 2 is much lower than its two other dimensions).

The flexible band comprises a substrate 6 made from an electrically insulating material, and a layer 8 of electrically conducting material assembled to the substrate 6 and having a pattern. The material of the substrate 6 may for example be a suitable glass-epoxy. The band may for example be formed during a continuous process prior to the process performed at the cell 4. For example, according to one embodiment, adhesive is provided on a front face 6a of the substrate.

Then, the substrate 6 and the adhesive are perforated according to a predetermined pattern of through holes 7 (see also Fig. 3b). Each hole 7 extends from a front face 6a of the substrate to an opposite back face 6b of the substrate, and has a cross-dimension or diameter of for example between 0.4 and 0.8 mm. Each hole is designed to receive an electrical connection device for electrical connection of a contact 9a-9h (to be described later) on the front face of the substrate to a contact (not shown) of an Integrated circuit (chip) of the smart card through the substrate. The distance between the neighbouring edges of two holes 7 can for example be at least 0.5 mm, so as to ensure a reliable process. For example, a gold wire is a suitable connection means.

Then, a layer 8 of electrically conductive material is fixed to the adhesive located on top of the substrate 6. Alternatively, the layer 8 could be fixed to the substrate 6 by any suitable way. The layer 8 is fixed to the top face 6a of the substrate 6. The layer 8 is for example made from copper or a copper alloy. Following the previously described continuous assembly step, and prior to what continuously occurs in the metallization cell 4, a pattern is provided in the layer 8. The patterning process may be performed as one continuous process comprising a plurality of steps, or as a plurality of successive continuous processes comprising one or more steps.

The layer 8 is formed with a repetitive geometrical pattern, which is identical for each zone (some symmetry or anti-symmetry is possible).

For example, this process is a photolithographic process. It includes the following sub-steps:
- lamination of a photo-resist over the layer 8,
- placing a mask over the band, with holes at locations which will provide the electrical contacts, then applying suitable light through the mask, to modify the unmasked areas of the photo-resist,
- removing the previously masked areas of the photo-resist,
- chemically etching the layer 8, in areas which are no longer masked,
- chemically stripping the remaining parts of the photo-resist.

The band thus formed is then handled by the band-forming apparatus 1, to apply an electrically conductive metal, for example gold, on the metal pattern. If applicable, some of the preceding steps could also be performed in the apparatus 1.

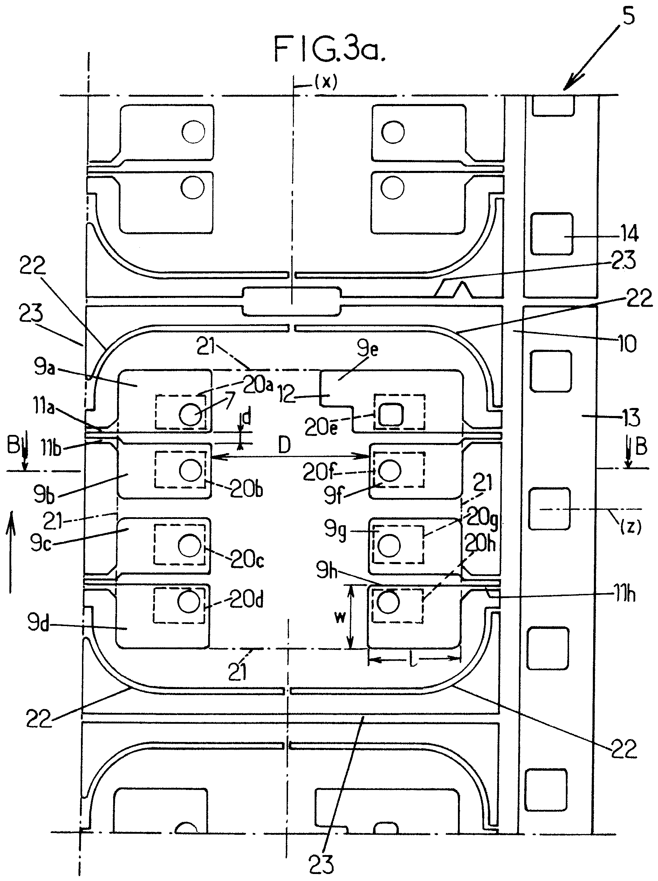

According to a first embodiment, the pattern of the layer 8 is shown on Fig. 3a for one zone. The pattern comprises eight electrical contacts 9a-9h. Alternatively, another number of contacts is possible, for example from five to eight contacts. Each contact 9a-9h is connected to a common conductive frame 10 by a respective conductive connection portion, such as a tail 11a-11h (only references 11a, 11b and 11h are shown). The contacts are arranged along two rows of four contacts: Contacts 9a-9d in a first row, 9e-9h in a parallel second row. Apart from the fact that the contact 9e can be a specific contact, as will be explained later in more details, there is symmetry of the two rows with respect to a centre line (x) of the zone.

According to the present example, contacts are provided by pairs, which are symmetrical to one another with respect to a virtual line (z) normal to the centre line (x). Hence, contacts 9b and 9c build one such pair. Contacts 9f and 9g form another one. Contacts 9a and 9d yet form another one. For example, these three pairs have a common virtual line (z).

In the present example, all the contacts 9a-9d and 9f-9h have a similar shape. This shape is that of a rectangle (the corners of the rectangle can be more or less rounded). Each rectangle has a width w and a length l.

Each rectangle encompasses a minimal rectangle of dimensions 2*1.7 mm², shown in dotted lines on Fig. 3a, which is located as follows with reference to the first minimal rectangle 20a: Each one of the minimal rectangles 20a-20h has a centre. The centres are aligned along two rows and four columns. The distance, along the direction (z), between the two rows is 7.62 mm. The distance, along direction (x), between two neighbour columns is 2.54 mm. The centres are for example located symmetrically with respect to a centre of the zone.

For example, the contacts 9a-9d have a shape which is at least a rectangle of dimensions 2.1 mm * 1.8 mm.

Alternatively, the contacts do not have to have a rectangular shape, provided they encompass this minimal rectangle.

Each rectangle wholly covers a corresponding hole 7. In particular, the smallest distance, in the (x)-(z) plane, between the edge of the hole and the edge of the contact is at least 0.05 mm, preferably at least 0.2 mm, to ensure a correct adherence of the contact on the substrate.

In fact, in the present embodiment, although the shape of contacts 9a-9d and 9f-9h is globally similar, the interior contacts 9b, 9c, 9f and 9g are slightly smaller than the other ones. In particular, they are smaller in width. Hence, the tail (for example the tail 11a) is straight whereas the tail 11b is angled.

The contacts of the first row and those of the second row are spaced from one another, respectively, along the direction (z) by a distance D which can be chosen to be at least 1.36 mm, so as to ensure that a contact of the complementary card reader will not simultaneously be in contact with two contacts of neighbouring rows. Hence, there is a copper-free region of width D between the two rows of contacts.

In a given row, two neighbour contacts are spaced from one another, along the direction (x) by a distance d, which prevents short-circuit between two neighbour contacts. d is for example at least 0.05 mm.

All that has been discussed above can also apply to the contact 9e. However, in the shown embodiment, the contact 9e may have, in addition to the shape already described, an extension 12. By definition, the extension 12 is not considered as a part of the contact 9e per say. The contact 9e may be provided with a shape different from that of the other contacts. This might be useful to provide orientation of the pad for integration in the card, if the contacts are not to have symmetrical functions.

For example, the contact 9e can be a contact intended to be connected to ground.

The extension is for example L-shaped, as shown, or have any other suitable shape. It can be confined between the contact 9a and its symmetry with respect to the central axis (x), as shown. Alternatively, it also extends between the contacts 9b and 9f, even between the contacts 9c and 9g, and even between the contacts 9d and 9h.

The pattern may also comprise the conductive frame 10 disclosed above, as well as strengthening regions 22 such as thin lines which globally surround the contacts 9a-9h. These regions provide bending stiffness to the band. Other strengthening regions 23 may also be provided, which separate neighbour zones of the band.

The band 5 also comprises driven means, so as to enable to drive the zones the one(s) after the other(s) through the cell 4. Such driven means may for example comprise two lateral strips 13 (only one is visible on Fig. 3a, the other one is symmetrical) which are actuated by suitable driving means to drive the band through the cell. For example, the strips 13 comprise holes 14 which cooperate with a complementary toothed driving mechanism (not shown). Any kind of suitable mechanism may be provided, with or without form cooperation.

The band 5 is driven through the cell 4. In the present example, the cell 4 is an electro-plating cell which comprises a bath comprising gold, through which the band is passed. The copper layer is electrically contacted by an electrode, and a current is made to pass, so that gold deposits onto the copper. Hence, a thin layer 15 of gold is deposited onto the copper layer 8 (see Fig. 3b), as well as below it where it is exposed (i.e. in the holes 7). The gold pattern will follow the copper pattern.

In alternative embodiments, other materials than gold may be used, provided they have excellent electrical conductivity. Such materials are those which are usually used as electrical contacts for the required card applications. Excellent electrical conductivity is for example defined in relation to the sub-lying copper, which does not have a so excellent electrical conductivity.

Alternatively, additional layers are provided between the substrate and the gold, to provide additional functions such as diffusion barriers or corrosion protection. For example, a layer of Ni is deposited between the copper and the gold.

After gold deposition, the band is rolled-up on the uptake station 3 (see Fig. 1). Hence, the gold-deposition process is performed repeatedly on successive zones in a continuous manner.

The band can then be cut into flexible individual printed circuits each comprising eight contacts electrically insulated from each other.

The flexible printed circuits are for example cut along a cutting line. This line defines the shape of the flexible circuit for example a rectangle having rounded corners. It has the following dimensions: 12.6 x 11.4 mm, where 12.6 mm is measured along the dimension (z). The radius of curvature of the corners is 2mm. The position of the cutting line can be defined by the wished position of the contacts in the final product. For example, the cut is performed, taking into account the dimensions of the card and of its module-receiving cavity, so that the upper left corner of the zone 20a is spaced out 10.25 mm and 19.23 mm from the edge of the card along the two respective directions.

The total contact area of the contacts 9a-9h is at most 126.45 mm². This area takes only into account the surface area of the contacts themselves, but does not take into account the surface area of the tails or that of the common frame. For example, it corresponds to the surface area of the contacts in the final product. In the present case, it corresponds to the surface area of the contacts contained in a virtual line 21 which defines a rectangle extending between the left most and the right most contact edges, and between the top most and the bottom most contact edges.

For example, the area of the each contact 9a, 9e (without the extension 12 as above defined), 9d and 9h, intersected by a rectangle of dimensions 12.6 mm x 11.4 mm, is 5.62 mm x 3.135 mm. 5.62 mm is measured along direction (z). For the other contacts, along the same orientations, it is 5. 62 mm x 2.49 mm. This gives a total surface area for the 8 contacts (without the extension 12) of 126.45 mm².

If possible, the contacts 9a-9h are manufactured so that most of their surface is inside the line 21. In the present example, only the tails 11a-11h are kept outside of this line 21.

The flexible printed circuit as produced is obtained at reduced cost, while still complying with at least one of the following requirements:
- good adhesion of the contacts on the flexible substrate,
- good adhesion of a bonding wire to the contacts,
- good electrical conductivity with a card reader,
- good life expectancy (including cases where the card is repeatedly inserted or removed from card readers).

Of course, these requirements will be more or less achieved depending on the requirements set by the card manufacturer. In particular, intermediate geometries could be achieved, within the frame of the invention, dependent of the card manufacturer requirements. Applications may require contacts (possibly all but the ground contact, or even all) to be at most 3 mm X 2 mm. Other applications may require contacts (possibly all but the ground contact, or even all) to be at least 4 mm x 2.3 mm.

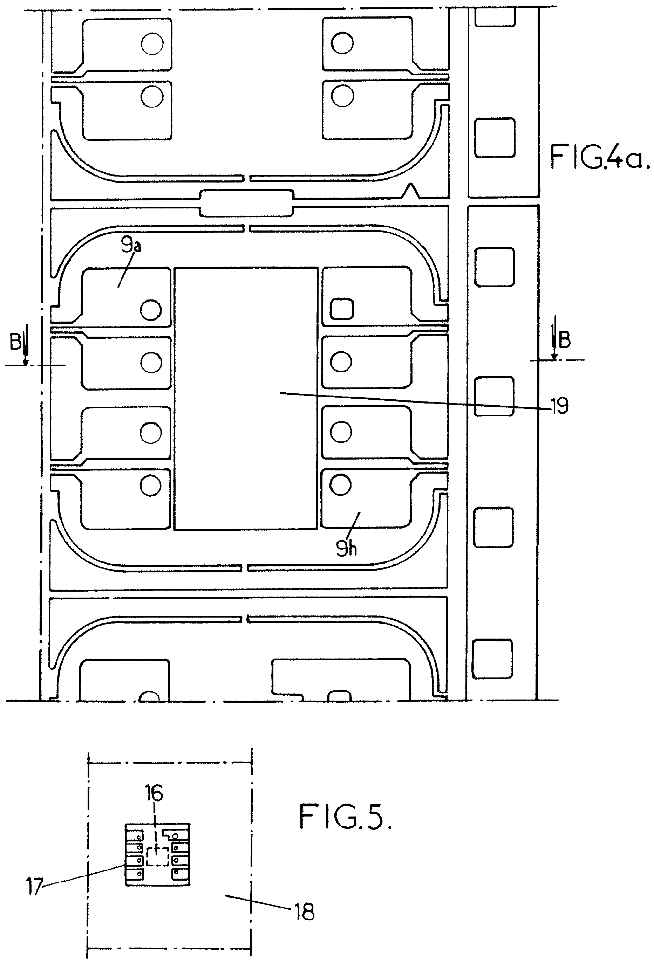

As shown on Fig. 5, an IC chip 16 can be attached to the bottom face of the substrate, and electrically connected to the contacts in any suitable way, such as by bonding a wire of gold between each contact of the chip and a respective contact of the flexible printed circuit through the holes 7. This module 17 can then be incorporated in a card 18, such as an ISO Smartcard or SIM card, in any suitable way.

Alternatively, the chip is provided elsewhere than on the back side of the module.

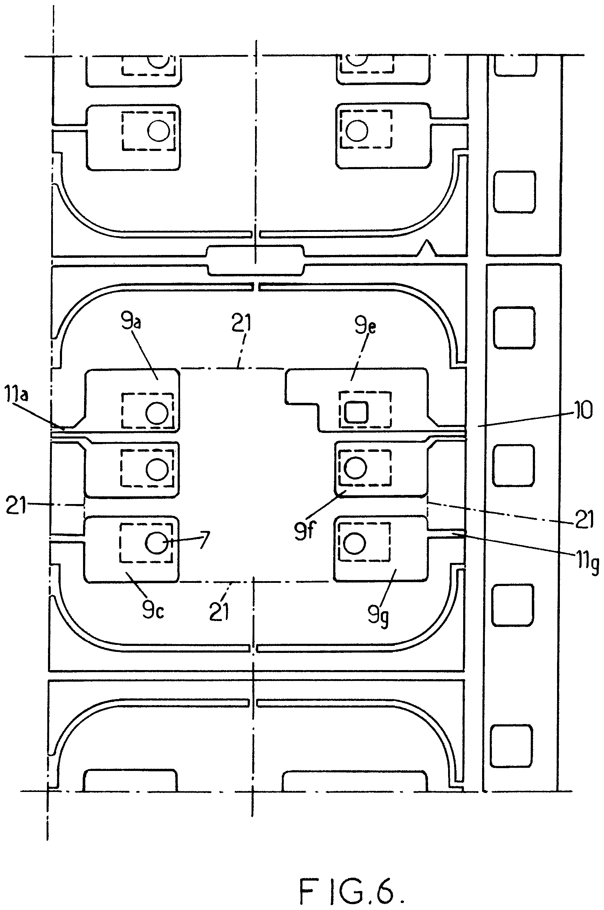

The second embodiment is now shown on Fig. 6. According to this second embodiment, the contact area or zone is provided with only six contacts 9a, 9b, 9c and 9e, 9f, 9g. The following description will be provided by reference to the description of the first embodiment, taking into account that, compared with this first embodiment, the contacts 9d and 9h are removed.

According to this embodiment, the position and the shape of the minimal contacts 20a, 20b, 20c, 20e, 20f, 20g is as in the first embodiment. The respective contacts have at least a minimal shape which encompasses the respective areas 20a-20c and 20e-20g.

The maximal contact surface area, intersected by the intersection region 21, is 127.02 mm². For example, each of the contacts, when intersected by a rectangle of dimensions 12.6 mm*11.4 mm, has a width of 5.62 mm. The height, measured along the axis (X), of the contact 9a, 9e, 9c and 9g is at most 4.405 mm. For the two remaining contacts, this height is at most 2.49 mm. The maximal contact surface area is 127.012 mm².

A third embodiment is now described in relation to Figs. 4a and 4b. This embodiment is similar to the first embodiment, with the further feature of a filler 19 between the contacts 9a-9h. The filler has an external surface 19a which flushes with the external surface 15a of the gold after gold deposition (See Fig. 4b). The filler is for instance made of an inexpensive material. The filler provides bending stiffness and/or strength to the module. For example, the filler is a metallic grid connected to the ground contact during the metallization process (for example using a small tail). The grid has for example a repetitive pattern of square holes of dimensions 0.300 x 0.300 mm, with a step of 0.450 mm. In such case, the external surface 19a of the filler flushes with the external surface 15a of the copper before gold deposition. This is alternatively achieved by spot plating.

For example, the filler 19 fills the space between the two rows of contacts (9a-9d on the one side, 9e-9h on the other side). In the present example, the filler 19 does not fill the space between two neighbour contacts of a given row. When calculating the summed surface area of the contacts of the flexible printed circuit, the filler 19 is not taken into account.

Optionally, the distance e between the edge 19c of the filler and the opposite edge 9' of the contact is less than the size of a terminal of a card reader. The filler thus prevents the edge 9' of the contact to be submitted to mechanical stress imparted by such terminals, when the card is introduced in a card reader. With the present embodiment, the terminal glides on the filler, then on the contact, when the card is slid into/out from the reader.

The "filler" embodiment may also be applied to the 6-contact embodiment of Fig. 6.

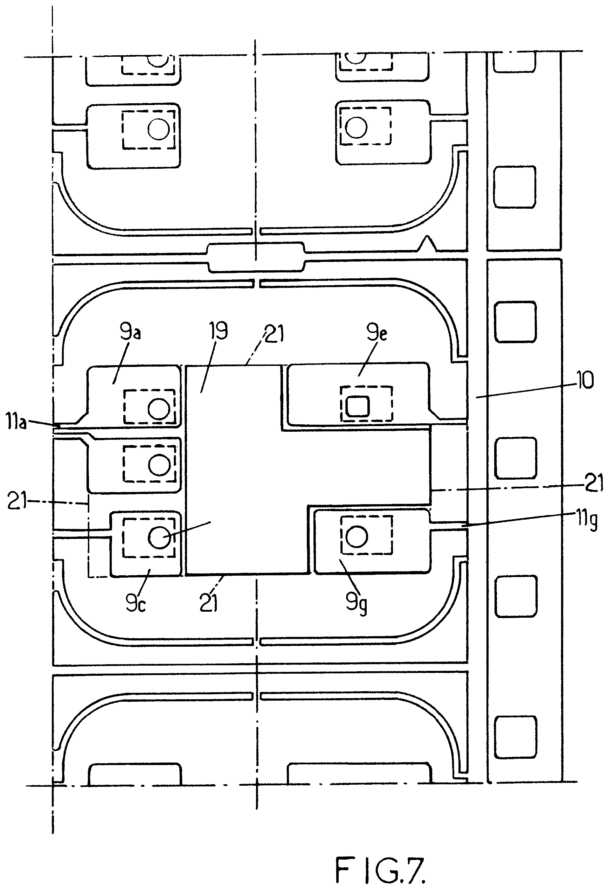

A fourth embodiment is now described in relation to Fig. 7. This embodiment is described by reference to the six-contact embodiment of Fig. 6. This embodiment is a five-contact embodiment, having only the contact 9a, 9b, 9c, 9e and 9g. In this embodiment, the contact 9f is removed.

Compared to the above-described embodiment of Fig. 6, the geometry of some of the contacts is modified, as shown. Also in this embodiment, a filler 19 is used. As shown, the filler 19 also extends in the place where the contact 9f extends in the six-contact embodiment. In this example, the filler is thus sensibly T-shaped.

When the filler extends in the place of the contact 9f, the summed surface area of the contacts of this embodiment is at most 113.01 mm².

## Claims

1. A method of manufacture of flexible printed circuits having electrical contacts, the method comprising:
- providing a rolled band (5) of a flexible material, said band being virtually divided in a plurality of zones (i ; j),
- unrolling the band so that zones are moved the one(s) after the other (s) through a metallization cell (4),
- forming a pattern of conducting material on the band of flexible material,
the method being **characterized by**
- forming on the band, in the metallization cell, at least five electrical contacts (9a-9g (or h)) per zone, said electrical contacts being made of electrically conductive material, each of said contact being connected to a common frame (10) by a respective connection portion (11a- 11h), wherein each contact has a shape which encompasses a rectangle of length 2 millimeters (mm) and width 1.7 mm, wherein a summed surface area of the contacts is less than 127.01 mm², and wherein forming contacts includes applying an electrically conducting material following the pattern.

2. A method according to claim 1, wherein each rectangle encompasses a rectangle of dimensions 2.1 mm * 1.8 mm.

3. A method according to any of claims 1 and 2, wherein the at least five electrical contacts per zone are arranged along a first row of at least three contacts, and a second row of at least two contacts, each row having a first end contact, a second end contact, at least the first row having at least one intermediate contact between the first and second end contacts.

4. A method according to claim 3, wherein the dimensions of the intermediate contacts, is at most 2.49 mm * 5.62 mm.

5. A method according to claim 3 or 4, wherein exactly eight electrical contacts are provided per zone, wherein the dimensions of the end contacts are at most (3.135 * 5.62) mm².

6. A method according to claim 3 or 4, wherein exactly six electrical contacts are provided per zone, wherein the dimensions of the end contacts are at most (4.405 * 5.62) mm².

7. A method according to any of claims 1 to 5, wherein exactly eight electrical contacts are provided per zone, wherein said summed surface area intersected by said intersection region is at most 126.45 mm².

8. A method according to claim 1, the method comprising: forming on the band, in the metallization cell, exactly eight electrical contacts (9a-9h) per zone, said electrical contacts being made of electrically conductive material, each of said contact being connected to a common frame (10) by a respective connection portion (11a-11h), wherein each contact has a shape which encompasses a rectangle of length 2 millimeters (mm) and width 1.7 mm, wherein a summed surface area of the contacts is less than 126.45 mm².

9. A method according to any of claims 1 to 4 or 6, wherein each zone has exactly six electrical contacts.

10. A method according to claim 1, the method comprising:
- forming on the band, in the metallization cell, exactly six electrical contacts (9a-9h) per zone, said electrical contacts being made of electrically conductive material, each of said contact being connected to a common frame (10) by a respective connection portion (11a-11h), wherein each contact has a shape which encompasses a rectangle of length 2 millimeters (mm) and width 1.7 mm, wherein a summed surface area of the contacts is less than 127.01 mm².

11. Method according to any of claims 1 to 10, wherein in each zone, contacts are spaced from one another along a first direction and along a second direction, orthogonal to the first direction, wherein at least one of the following is satisfied:
- along the first direction, two contacts are spaced from one another by a distance d chosen to be at least 0.05 mm ;
- along the second direction, two contacts are spaced from one another by a distance D chosen to be at least 1.36 mm .

12. Method according to any of claims 1 to 11, wherein said contacts have a better electrical conductivity than that of a mere copper layer.

13. Method according to any of claims 1 to 12, further comprising placing, in each zone, a filler (19) between at least two contacts.

14. Method according to claim 13, wherein said contacts have an external surface, wherein said filler (19) has an external surface coplanar with the external surface of the contacts.

15. Method according to any of claims 1 to 14, wherein at least two parallel rows of zones are formed.

16. Method according to any of claims 1 to 15 wherein the band has at least one through hole corresponding to at least one contact, per zone, wherein a distance between an edge of the through hole and any edge of said contact is at least 50 µm, preferably at least 200 µm.

17. A method according to any preceding claim, wherein the rolled band (5) of flexible material, is provided as an assembly of an electrically insulating material with holes and a layer of electrically conducting material having a pattern covering said holes, and wherein a distance between an edge of the through hole and any edge of contact is at least 50 µm, preferably at least 200 µm.

18. Method according to claim 16 or 17 wherein said hole has a cross-dimension of between 0.4 and 0.8 mm.

19. A flexible printed circuit manufactured on a flexible band by a method according to any of claims 1 to 18, and comprising the features of at least one of said claims.

20. A flexible printed circuit according to claim 19, and further comprising a filler (19) provided between at least two contacts.

21. A flexible printed circuit according to any of claims 19 to 20, wherein the circuit comprises a through hole in the flexible material, and wherein a distance between any edge of the hole and any edge of any contact is at least 0.05 mm.

22. A flexible printed circuit according to any of claims 19 to 21, wherein two contacts are spaced from one another by a distance D chosen to be at least 1.36 mm.

23. A module comprising a flexible printed circuit according to any of claims 19 to 22, and an IC chip having contacts electrically connected to a respective contact of the circuit.

24. A card comprising a flexible printed circuit according to any of claims 19 to 22 or a module according to claim 23.

## Patentansprüche

1. Verfahren zur Herstellung flexibler Leiterplatten mit elektrischen Kontakten, das Verfahren umfassend:
- Bereitstellen eines gerollten Bands (5) aus einem flexiblen Material, wobei das Band praktisch in eine Vielzahl von Zonen (i, j) aufgeteilt ist,
- Abrollen des Bands, so dass Zonen eine nach der anderen durch eine Metallisierungszelle (4) bewegt werden,
- Ausbilden eines Musters von leitendem Material auf dem Band aus flexiblem Material, wobei das Verfahren **gekennzeichnet ist durch**
- Ausbilden auf dem Band in der Metallisierungszelle von wenigstens fünf elektrischen Kontakten (9a-9g (oder h)) pro Zone, wobei die elektrischen Kontakte aus elektrisch leitfähigem Material hergestellt sind, wobei jeder Kontakt mit einem gemeinsamen Rahmen (10) durch einen jeweiligen Verbindungsabschnitt (11 a-11 h) verbunden ist, wobei jeder Kontakt eine Form aufweist, die ein Rechteck mit einer Länge von 2 Millimetern (mm) und einer Breite von 1,7 mm umfasst, wobei ein summierter Oberflächenbereich der Kontakte weniger als 127,01 mm² beträgt und wobei das Ausbilden von Kontakten das Aufbringen eines elektrisch leitenden Materials nach dem Muster umfasst.

2. Verfahren nach Anspruch 1, wobei jedes Rechteck ein Rechteck mit den Abmessungen 2,1 mm * 1,8 mm umfasst.

3. Verfahren nach einem der Ansprüche 1 und 2, wobei die wenigstens fünf elektrischen Kontakte pro Zone entlang einer ersten Reihe von wenigstens drei Kontakten und einer zweiten Reihe von wenigstens zwei Kontakten angeordnet sind, wobei jede Reihe einen ersten Endkontakt und einen zweiten Endkontakt aufweist, wobei wenigstens die erste Reihe wenigstens einen Zwischenkontakt zwischen dem ersten und dem zweiten Endkontakt aufweist.

4. Verfahren nach Anspruch 3, wobei die Abmessungen der Zwischenkontakte höchstens 2,49 mm * 5,62 mm betragen.

5. Verfahren nach Anspruch 3 oder 4, wobei genau acht elektrische Kontakte pro Zone bereitgestellt werden, wobei die Abmessungen der Endkontakte höchstens (3,135 * 5,62) mm² betragen.

6. Verfahren nach Anspruch 3 oder 4, wobei genau sechs elektrische Kontakte pro Zone bereitgestellt werden, wobei die Abmessungen der Endkontakte höchstens (4,405 * 5,62) mm² betragen.

7. Verfahren nach einem der Ansprüche 1 bis 5, wobei genau acht elektrische Kontakte pro Zone bereitgestellt werden, wobei der summierte Oberflächenbereich, der durch die Schnittregion geschnitten wird, höchstens 126,45 mm² beträgt.

8. Verfahren nach Anspruch 1, das Verfahren umfassend: Ausbilden auf dem Band in der Metallisierungszelle von genau acht elektrischen Kontakten (9a-9h) pro Zone, wobei die elektrischen Kontakte aus elektrisch leitfähigem Material hergestellt sind, wobei jeder Kontakt mit einem gemeinsamen Rahmen (10) durch einen jeweiligen Verbindungsabschnitt (11a-11h) verbunden ist, wobei jeder Kontakt eine Form aufweist, die ein Rechteck mit einer Länge von 2 Millimetern (mm) und einer Breite von 1,7 mm umfasst, wobei ein summierter Oberflächenbereich der Kontakte weniger als 126,45 mm² beträgt.

9. Verfahren nach einem der Ansprüche 1 bis 4 oder 6, wobei jede Zone genau sechs elektrische Kontakte aufweist.

10. Verfahren nach Anspruch 1, das Verfahren umfassend:
- Ausbilden auf dem Band in der Metallisierungszelle von genau sechs elektrischen Kontakten (9a-9h) pro Zone, wobei die elektrischen Kontakte aus elektrisch leitfähigem Material hergestellt sind, wobei jeder Kontakt mit einem gemeinsamen Rahmen (10) durch einen jeweiligen Verbindungsabschnitt (11a-11h) verbunden ist, wobei jeder Kontakt eine Form aufweist, die ein Rechteck mit einer Länge von 2 Millimetern (mm) und einer Breite von 1,7 mm umfasst, wobei ein summierter Oberflächenbereich der Kontakte weniger als 127,01 mm² beträgt.

11. Verfahren nach einem der Ansprüche 1 bis 10, wobei die Kontakte in jeder Zone entlang einer ersten Richtung und entlang einer zweiten Richtung, die orthogonal zur ersten Richtung ist, voneinander beabstandet sind, wobei wenigstens eines von Folgendem erfüllt ist:
- entlang der ersten Richtung sind zwei Kontakte mit einem Abstand d voneinander beabstandet, der so gewählt ist, dass er wenigstens 0,05 mm beträgt;
- entlang der zweiten Richtung sind zwei Kontakte mit einem Abstand D voneinander beabstandet, der so gewählt ist, dass er wenigstens 1,36 mm beträgt.

12. Verfahren nach einem der Ansprüche 1 bis 11, wobei die Kontakte eine bessere elektrische Leitfähigkeit als die einer bloßen Kupferschicht aufweisen.

13. Verfahren nach einem der Ansprüche 1 bis 12, ferner umfassend Anordnen in jeder Zone eines Füllstoffs (19) zwischen wenigstens zwei Kontakten.

14. Verfahren nach Anspruch 13, wobei die Kontakte eine externe Oberfläche aufweisen, wobei der Füllstoff (19) eine externe Oberfläche aufweist, die mit der externen Oberfläche der Kontakte koplanar ist.

15. Verfahren nach einem der Ansprüche 1 bis 14, wobei wenigstens zwei parallele Reihen von Zonen ausgebildet werden.

16. Verfahren nach einem der Ansprüche 1 bis 15, wobei das Band wenigstens ein Durchgangsloch aufweist, das wenigstens einem Kontakt entspricht, pro Zone, wobei ein Abstand zwischen einer Kante des Durchgangslochs und einer beliebigen Kante des Kontakts wenigstens 50 µm, vorzugsweise wenigstens 200 µm, beträgt.

17. Verfahren nach einem der vorhergehenden Ansprüche, wobei das gerollte Band (5) aus flexiblem Material als eine Anordnung aus einem elektrisch isolierenden Material mit Löchern und einer Schicht aus elektrisch leitendem Material mit einem die Löcher bedeckenden Muster bereitgestellt wird, und wobei ein Abstand zwischen einer Kante des Durchgangslochs und einer beliebigen Kontaktkante wenigstens 50 µm, vorzugsweise wenigstens 200 µm, beträgt.

18. Verfahren nach Anspruch 16 oder 17, wobei das Loch eine Querschnittsabmessung zwischen 0,4 und 0,8 mm aufweist.

19. Flexible Leiterplatte, die auf einem flexiblen Band nach einem Verfahren gemäß einem der Ansprüche 1 bis 18 hergestellt ist und die Merkmale von wenigstens einem der Ansprüche umfasst.

20. Flexible Leiterplatte nach Anspruch 19, und ferner umfassend einen Füllstoff (19), der zwischen wenigstens zwei Kontakten bereitgestellt wird.

21. Flexible Leiterplatte nach einem der Ansprüche 19 bis 20, wobei die Leiterplatte ein Durchgangsloch im flexiblen Material umfasst, und wobei ein Abstand zwischen einer beliebigen Kante des Lochs und einer beliebigen Kante eines beliebigen Kontakts wenigstens 0,05 mm beträgt.

22. Flexible Leiterplatte nach einem der Ansprüche 19 bis 21, wobei zwei Kontakte mit einem Abstand D voneinander beabstandet sind, der so gewählt ist, dass er wenigstens 1,36 mm beträgt.

23. Modul mit einer flexiblen Leiterplatte nach einem der Ansprüche 19 bis 22 und einem IC-Chip mit Kontakten, die mit einem entsprechenden Kontakt der Leiterplatte elektrisch verbunden sind.

24. Karte mit einer flexiblen Leiterplatte nach einem der Ansprüche 19 bis 22 oder einem Modul nach Anspruch 23.

## Revendications

1. Procédé de fabrication de circuits imprimés flexibles ayant des contacts électriques, le procédé comprenant :
- la fourniture d'une bande laminée (5) d'un matériau flexible, ladite bande étant virtuellement divisée en une pluralité de zones (i ; j),
- le déroulement de la bande de telle sorte que les zones soient déplacées l'une après l'autre (les unes après les autres) à travers une cellule de métallisation (4),
- la formation d'un motif de matériau conducteur sur la bande de matériau flexible,
le procédé étant **caractérisé par**
- la formation sur la bande, dans la cellule de métallisation, d'au moins cinq contacts électriques (9a-9g (ou h)) par zone, lesdits contacts électriques étant constitués d'un matériau électriquement conducteur, chacun desdits contacts étant relié à un cadre commun (10) par une partie de connexion respective (11a-11h), chaque contact ayant une forme qui inclut un rectangle d'une longueur de 2 millimètres (mm) et d'une largeur de 1,7 mm, une surface additionnée des contacts faisant moins de 127,01 mm², et la formation de contacts comportant l'application d'un matériau électriquement conducteur en suivant le motif.

2. Procédé selon la revendication 1, dans lequel chaque rectangle inclut un rectangle de dimensions 2,1 mm * 1,8 mm.

3. Procédé selon l'une quelconque des revendications 1 et 2, dans lequel les au moins cinq contacts électriques par zone sont agencés le long d'une première rangée d'au moins trois contacts, et d'une deuxième rangée d'au moins deux contacts, chaque rangée ayant un premier contact d'extrémité, un deuxième contact d'extrémité, au moins la première rangée ayant au moins un contact intermédiaire entre le premier et le deuxième contact d'extrémité.

4. Procédé selon la revendication 3, dans lequel les dimensions des contacts intermédiaires font au maximum 2,49 mm * 5,62 mm.

5. Procédé selon la revendication 3 ou 4, dans lequel exactement huit contacts électriques sont obtenus par zone, les dimensions des contacts d'extrémité faisant au maximum (3,135 * 5,62) mm².

6. Procédé selon la revendication 3 ou 4, dans lequel exactement six contacts électriques sont obtenus par zone, les dimensions des contacts d'extrémité faisant au maximum (4,405 * 5,62) mm².

7. Procédé selon l'une quelconque des revendications 1 à 5, dans lequel exactement huit contacts électriques sont obtenus par zone, ladite surface additionnée intersectée par ladite région d'intersection faisant au maximum 126,45 mm².

8. Procédé selon la revendication 1, le procédé comprenant: la formation sur la bande, dans la cellule de métallisation, d'exactement huit contacts électriques (9a-9h) par zone, lesdits contacts électriques étant constitués d'un matériau électriquement conducteur, chacun desdits contacts étant relié à un cadre commun (10) par une partie de connexion respective (11 a-11 h), chaque contact ayant une forme qui inclut un rectangle d'une longueur de 2 millimètres (mm) et d'une largeur de 1,7 mm, une surface additionnée des contacts faisant moins de 126,45 mm².

9. Procédé selon l'une quelconque des revendications 1 à 4 ou 6, dans lequel chaque zone a exactement six contacts électriques.

10. Procédé selon la revendication 1, le procédé comprenant :
- la formation sur la bande, dans la cellule de métallisation, d'exactement six contacts électriques (9a-9h) par zone, lesdits contacts électriques étant constitués d'un matériau électriquement conducteur, chacun desdits contacts étant relié à un cadre commun (10) par une partie de connexion respective (11a-11h), chaque contact ayant une forme qui inclut un rectangle d'une longueur de 2 millimètres (mm) et d'une largeur de 1,7 mm, une surface additionnée des contacts faisant moins de 127,01 mm².

11. Procédé selon l'une quelconque des revendications 1 à 10, dans lequel dans chaque zone, les contacts sont espacés l'un de l'autre le long d'une première direction et le long d'une deuxième direction, orthogonale à la première direction, au moins une des conditions suivantes étant satisfaite :
- le long de la première direction, deux contacts sont espacés l'un de l'autre par une distance d choisie pour faire au moins 0,05 mm ;
- le long de la deuxième direction, deux contacts sont espacés l'un de l'autre par une distance D choisie pour faire au moins 1,36 mm.

12. Procédé selon l'une quelconque des revendications 1 à 11, dans lequel lesdits contacts ont une meilleure conductivité électrique que celle d'une simple couche de cuivre.

13. Procédé selon l'une quelconque des revendications 1 à 12, comprenant en outre le positionnement, dans chaque zone, d'un matériau de remplissage (19) entre au moins deux contacts.

14. Procédé selon la revendication 13, dans lequel lesdits contacts ont une surface externe, ledit matériau de remplissage (19) ayant une surface externe coplanaire avec la surface externe des contacts.

15. Procédé selon l'une quelconque des revendications 1 à 14, dans lequel au moins deux rangées parallèles de zones sont formées.

16. Procédé selon l'une quelconque des revendications 1 à 15 dans lequel la bande a au moins un trou traversant correspondant à au moins un contact, par zone, une distance entre un bord du trou traversant et n'importe quel bord dudit contact faisant au moins 50 µm, de préférence au moins 200 µm.

17. Procédé selon une quelconque revendication précédente, dans lequel la bande laminée (5) de matériau flexible est obtenue sous la forme d'un assemblage d'un matériau électriquement isolant avec des trous et d'une couche de matériau électriquement conducteur ayant un motif recouvrant lesdits trous, et dans lequel une distance entre un bord du trou traversant et n'importe quel bord de contact fait au moins 50 µm, de préférence au moins 200 µm.

18. Procédé selon la revendication 16 ou 17 dans lequel ledit trou a une dimension transversale comprise entre 0,4 et 0,8 mm.

19. Circuit imprimé flexible fabriqué sur une bande flexible par un procédé selon l'une quelconque des revendications 1 à 18, et comprenant les caractéristiques d'au moins une desdites revendications.

20. Circuit imprimé flexible selon la revendication 19, et comprenant en outre un matériau de remplissage (19) disposé entre au moins deux contacts.

21. Circuit imprimé flexible selon l'une quelconque des revendications 19 à 20, le circuit comprenant un trou traversant dans le matériau flexible, et une distance entre n'importe quel bord du trou et n'importe quel bord de n'importe quel contact faisant au moins 0,05 mm.

22. Circuit imprimé flexible selon l'une quelconque des revendications 19 à 21, dans lequel deux contacts sont espacés l'un de l'autre par une distance D choisie pour faire au moins 1,36 mm.

23. Module comprenant un circuit imprimé flexible selon l'une quelconque des revendications 19 à 22, et une puce IC ayant des contacts électriquement reliés à un contact respectif du circuit.

24. Carte comprenant un circuit imprimé flexible selon l'une quelconque des revendications 19 à 22 ou un module selon la revendication 23.
